(19)

Europäisches
Patentamt

European
Patent Office

Office européen
des brevets

(11) **EP 4 524 832 A1**

(12) **EUROPEAN PATENT APPLICATION**

(43) Date of publication:
**19.03.2025 Bulletin 2025/12**

(21) Application number: **23197141.7**

(22) Date of filing: **13.09.2023**

(51) International Patent Classification (IPC):
**G06N 20/00** $^{(2019.01)}$    **H04L 25/02** $^{(2006.01)}$
**G06F 7/58** $^{(2006.01)}$

(52) Cooperative Patent Classification (CPC):
**H04L 25/03165; G06N 20/00; G06F 7/582**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Technologies Oy
02610 Espoo (FI)**

(72) Inventors:
• **KORPI, Dani Johannes
Tampere (FI)**
• **VEIJALAINEN, Teemu Mikael
Helsinki (FI)**

(74) Representative: **Nokia EPO representatives
Nokia Technologies Oy
Karakaari 7
02610 Espoo (FI)**

(54) **MACHINE LEARNING RECEIVERS**

(57)    Examples of the disclosure relate to producing training or calibration data for use by Machine Learning receivers. In some examples a data node receives, from a machine learning node, an indication of a capability of generating a random bit sequence. The data node transmits, to the machine learning node, one or more parameters for generating a random bit sequence. The parameters conform to the indicated capability. The data node also transmits a random bit sequence wherein the random bit sequence is generated in accordance with the transmitted parameters.

FIG. 2

EP 4 524 832 A1

## Description

TECHNOLOGICAL FIELD

Examples of the disclosure relate to machine learning (ML) receivers. Some relate to producing training or calibration data for use by ML receivers.

BACKGROUND

ML models can be used by receivers within communication networks to improve the performance of the receivers. The ML models can be used for the physical layer processing or for any other suitable functions. For example, the ML models can be used to perform tasks such as channel estimation and equalization.

BRIEF SUMMARY

According to various, but not necessarily all, examples of the disclosure there is provided a data node comprising means for:

receiving, from a machine learning node, an indication of a capability of generating a random bit sequence;
transmitting, to the machine learning node, one or more parameters for generating a random bit sequence wherein the parameters conform to the indicated capability; and
transmitting a random bit sequence wherein the random bit sequence is generated in accordance with the transmitted parameters.

The one or more parameters may comprise at least one of:

one or more random number generator algorithms;
a seed of the random number generator;
a length of a random bit sequence that is to be generated.

The random bit sequence may comprise training data for training a machine learning model in the machine learning node.
The random bit sequence may be transmitted on demand.
The random bit sequence may be transmitted using a pattern defined in the indicated capability.
The random bit sequence may be broadcast to two or more machine learning nodes.
The means may be for measuring resource usage during a time interval and transmitting the random bit sequence if the resource usage is below a threshold.
The random bit sequence may be mapped directly to transmitted symbols.
The data node may comprise one of:

a user equipment;
an access node.

According to various, but not necessarily all, examples of the disclosure there is provided a method comprising:

receiving, from a machine learning node, an indication of a capability of generating a random bit sequence;
transmitting, to the machine learning node, one or more parameters for generating a random bit sequence wherein the parameters conform to the indicated capability; and
transmitting a random bit sequence wherein the random bit sequence is generated in accordance with the transmitted parameters.

According to various, but not necessarily all, examples of the disclosure there is provided a computer program comprising instructions which, when executed by a data node, cause the data node to perform at least:

receiving, from a machine learning node, an indication of a capability of generating a random bit sequence;
transmitting, to the machine learning node, one or more parameters for generating a random bit sequence wherein the parameters conform to the indicated capability; and
transmitting a random bit sequence wherein the random bit sequence is generated in accordance with the transmitted parameters.

According to various, but not necessarily all, examples of the disclosure there is provided a machine learning node comprising means for:

transmitting, to a data node, an indication of a capability of generating a random bit sequence;
receiving, from the data node, one or more parameters for generating a random bit sequence wherein the received parameters conform to the indicated capability; and
receiving, from the data node, a random bit sequence wherein the random bit sequence comprises training data for training a machine learning model in the machine learning node.

The means may be for labelling the received random bit sequence using a random bit sequence generated using the received one or more parameters so that the labelled data can be used to train the machine learning model.
The means may be for storing a received raw signal comprising the transmitted bit sequence.
The means may be for using the stored raw signal as inputs for training a machine learning model.

The machine learning model may be trained to estimate received bit probabilities.

The means may be for demodulating received signals and logging the received random bit sequence after the demodulation.

The means may be for transmitting a request to the data node for the random bit sequences.

The request may comprise at least one of:

a random number generator algorithm to be used;
a state of a random number generator algorithm to be used;
a length of a random bit sequence that is to be generated;
transmit power levels to be used for a signal comprising the random bit sequence.

The machine learning node may comprise one of:

a user equipment;
an access node.

According to various, but not necessarily all, examples of the disclosure there is provided a method comprising:

transmitting, to a data node, an indication of a capability of generating a random bit sequence;
receiving, from the data node, one or more parameters for generating a random bit sequence wherein the received parameters conform to the indicated capability; and
receiving, from the data node, a random bit sequence wherein the random bit sequence comprises training data for training a machine learning model in the machine learning node.

According to various, but not necessarily all, examples of the disclosure there is provided a computer program comprising instructions which, when executed by a machine learning node, cause the machine learning node to perform at least:

transmitting, to a data node, an indication of a capability of generating a random bit sequence;
receiving, from the data node, one or more parameters for generating a random bit sequence wherein the received parameters conform to the indicated capability; and
receiving, from the data node, a random bit sequence wherein the random bit sequence comprises training data for training a machine learning model in the machine learning node.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION

Some examples will now be described with reference to the accompanying drawings in which:

FIG. 1 shows an example network;
FIG. 2 shows an example ML receiver;
FIGS. 3A and 3B show example methods;
FIG. 4 shows an example method;
FIG. 5 shows an example method;
FIG. 6 shows an example physical layer mapping;
FIG. 7 shows an example method;
FIG. 8 shows an example method; and
FIG. 9 shows an example controller.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

DEFINITIONS

| | |
|---|---|
| CNN | Convolutional Neural Network |
| CRC | Cyclic Redundancy Check |
| DCI | Downlink Control Information |
| DL | Downlink |
| DMRS | Demodulation Reference Signal |
| gNB | gNodeB |
| MAC | Medium Access Control |
| MAC CE | MAC Control Element |
| ML | Machine Learning |
| PDDCH | Physical Downlink Control Channel |
| PUSCH | Physical Uplink Shared Channel |
| RB | Resource Block |
| RE | Resource Element |
| ResNet | Residual Network |
| RNG | Random Number Generator |
| RRC | Radio Resource Control |
| SI | System Information |
| SISO | Single-Input and Single-Output |
| TB | Transport Block |

TTI       Time Transmission Interval
UCI      Uplink Control Information
UE       User Equipment
UL       Uplink

DETAILED DESCRIPTION

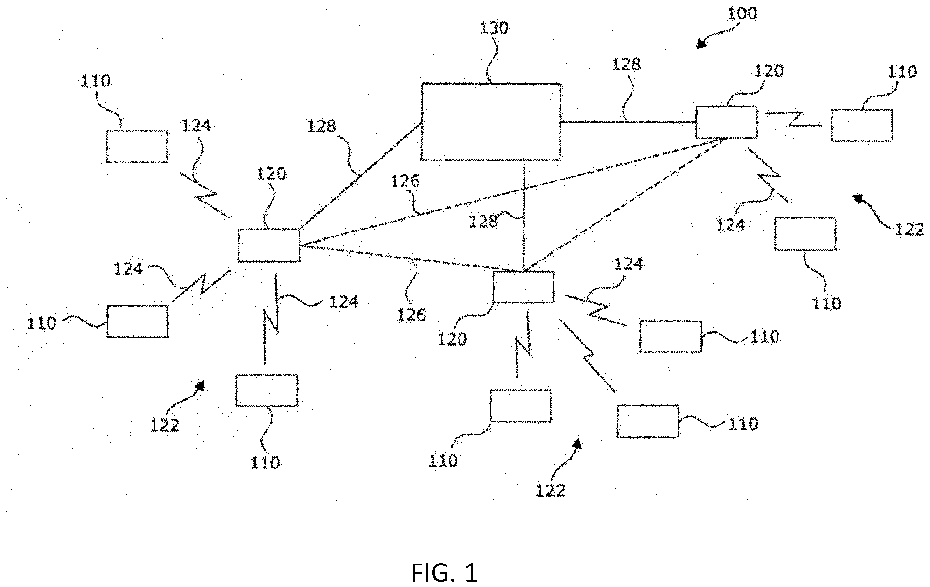

Fig. 1 illustrates an example of a communications network 100 such as a 5G network or a 6G network or any other suitable type of network. The network 100 comprises a plurality of different types of nodes 110, 120, 130. The different types of nodes 110, 120, 130. can comprise terminal nodes 110, and network nodes 120, 130. The network nodes can comprise access nodes 120 and core network nodes 130 and/or any other suitable type of apparatus.

The access nodes 120 can be configured to communicate with the terminal nodes 110. The core network nodes 130 communicate with the access nodes 120. In some examples the core network nodes 130 communicate with the terminal nodes 110.

The core network nodes 130 can, in some examples, communicate with each other. The one or more access nodes 120 can, in some examples, communicate with each other.

The network 100 can be a cellular network comprising a plurality of cells 122. Each of the cells is served by an access node 120. In this example, the interface between the terminal node 110 and an access node 120 defining a cell 122 is a wireless interface 124.

The access nodes 120 can comprise one or more cellular radio transceivers. The terminal nodes 110 can comprise one or more cellular radio transceivers.

The access nodes 120 can be base stations. The access nodes 120 can be any suitable type of base station. The access node 120 can be a network entity responsible for radio transmission and reception in one or more cells to or from terminal nodes 110. The access node 120 can be a network element in a Radio Access Network (RAN), or any other suitable type of network.

The core network nodes 130 can be part of a core network. The core network nodes 130 can be configured to manage functions relating to connectivity for the UEs 110. For example, the core network nodes 130 can be configured to manage functions such as connectivity, mobility, authentication, authorization and/or other suitable functions.

In the example of Fig. 1 the core network node 130 is shown as a single entity. In some examples the core network node 130 could be distributed across multiple entities. For example, the core network node 130 could be cloud based or distributed in any other suitable manner.

One or more of the nodes in the network 100 can be configured to us ML models. The ML models can be configured to improve the performance of the individual nodes within the network 100. For example, an ML receiver can be a node that receives signals and uses an ML model to perform processing tasks on the received signals. The processing tasks could be channel estimation or equalization or any other suitable tasks. The ML receiver could be a terminal node 110 such as User Equipment (UE) or an access node 120 such as a gNodeB (gNB) or any other suitable type of node.

The ML models can comprise neural networks or any other suitable models. In some examples the ML model can be implemented using a trainable computer program. The trainable computer program can comprise any program that can be trained to perform one or more tasks without being explicitly programmed to perform those tasks.

The ML models that are used within ML receivers can comprise a neural network or any other suitable type of trainable model. The term "Machine Learning Model" refers to any kind of artificial intelligence (AI), intelligent or other method that is trainable or tuneable using data. The ML model can comprise a computer program. The ML model can be trained to perform a task, such as channel estimation or equalization, without being explicitly programmed to perform that task. The ML model can be configured to learn from experience E with respect to some class of tasks T and performance measure P if its performance at tasks in T, as measured by P, improves with experience E. In these examples the ML model can often learn from the training data or calibration data to make estimations on future data. The ML model can be also a trainable computer program. Other types of ML models could be used in other examples.

It is also possible to train one ML model with specific architecture, then derive another ML model from that using processes such as compilation, pruning, quantization or distillation. The term ML Model covers also all these use cases and the outputs of them. The ML model can be executed using any suitable apparatus, for example CPU, GPU, ASIC, FPGA, compute-in-memory, analog, or digital, or optical apparatus. It is also possible to execute the ML model in apparatus that combine features from any number of these, for instance digital-optical or analog-digital hybrids. In some examples the weights and required computations in these systems can be programmed to correspond to the ML model. In some examples the apparatus can be designed and manufactured so as to perform the task defined by the ML model so that the apparatus is configured to perform the task when it is manufactured without the apparatus being programmable as such.

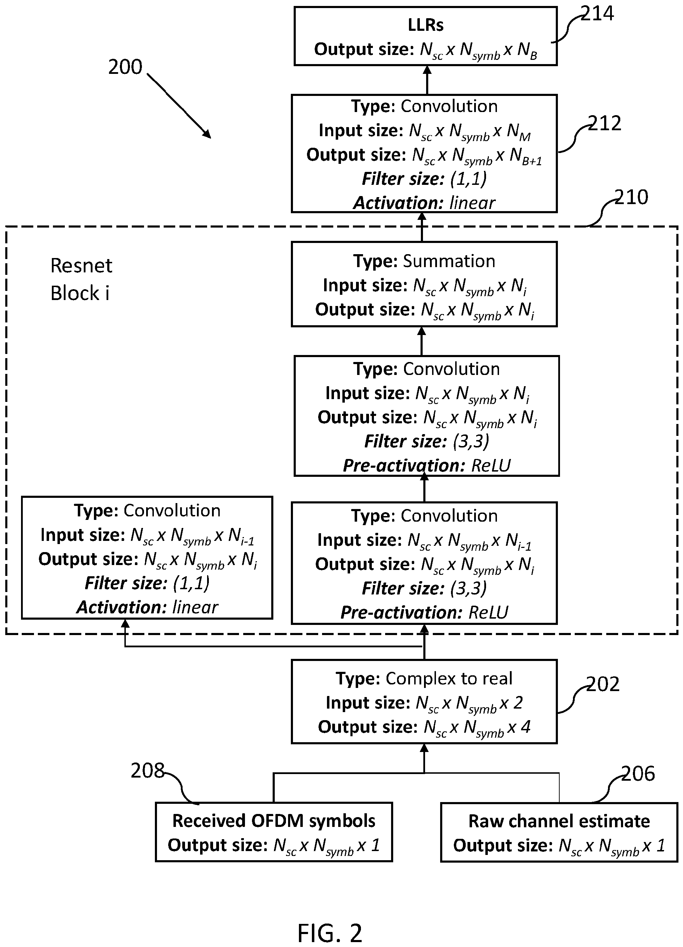

Fig. 2 shows an example ML model 200 that can be used in an ML receiver. Other types of ML models can be used in other examples.

This example ML model 200 can be used for a single-input and single-output (SISO) scenario. In this example the ML model 200 is a Residual Network (ResNet) type Convolutional Neural Network (CNN). The input 202 for the ML model 200 is one time transmission interval (TTI). The TTI comprises $N_{symb}$ OFDM symbols. The number of OFDM symbols is typically 14. The TTI comprises $N_{sc}$ subcarriers.

The input 202 for the ML model 200 comprises two channels. The first input channel 204 comprises the complex-valued received signal and the second input channel 206 comprises the complex-valued raw channel estimate. The input 202 for the ML model 200 therefore comprises a real-valued $N_{sc} \times N_{symb} \times 4$ array. In this array the last dimension represents the number of input channels.

In other examples the ML model 200 can be used for a multiple-input multiple-output (MIMO) scenario. In such examples the channel matrix can be vectorized along the channel dimension. This results in $N_L N_R$ raw channel estimates per resource element, where $N_L$ is the number of layers and $N_R$ is the number of Rx antennas (correspondingly, the received OFDM symbol array would consist of $N_R$ samples per resource element).

The ML model 200 is configured so that the input array is processed with one or more ResNet blocks 210. If the number of channels between two consecutive ResNet blocks 210 is the same, the convolutional layer of the skip connection can be omitted.

One ResNet block 210 is shown in Fig. 2. The ResNet block 210 can be repeated M times. The input for ResNet Block *i* is the output of Resnet Block *i-1.* In the example of Fig. 2. $N_{sc}$ is the number of received subcarriers on the active bandwidth part, $N_{symb}$ is the number of OFDM symbols in a slot (typically 14), $N_1... N_{j+k+l}$ is the number of output channels in the convolutional layers inside the individual ResNet blocks 210, and $N_B$ is the number of bits per resource element (RE).

The ML model 200 is configured so that the output of the ResNet blocks 210 is fed to a final 2-dimensional convolutional layer 212. The final 2-dimensional convolutional layer 212 provides the final log-likelihood ratio (LLR) estimates as the output 214. The LLR estimates are the ML receiver's estimates of the probabilities of the transmitted bits. The original transmitted bits represent the ideal output of the ML model 200.

The ML model 200 can be trained with simulated data, where access to the original transmit sequence is not an issue. However, there are scenarios where the ML model 200 might require training data collected in the network. Examples of the disclosure provide a mechanism for an ML receiver to obtain the originally transmitted bits so that this can be used for training the ML model 200.

To train robust ML-models for ML receivers, the bit sequences used for producing training data must be stochastic. If there is only a limited number of previously agreed training bit sequences, the models will always overfit to predict only these sequences. Examples of the disclosure ensure that the originally transmitted bits comprise random bit sequences.

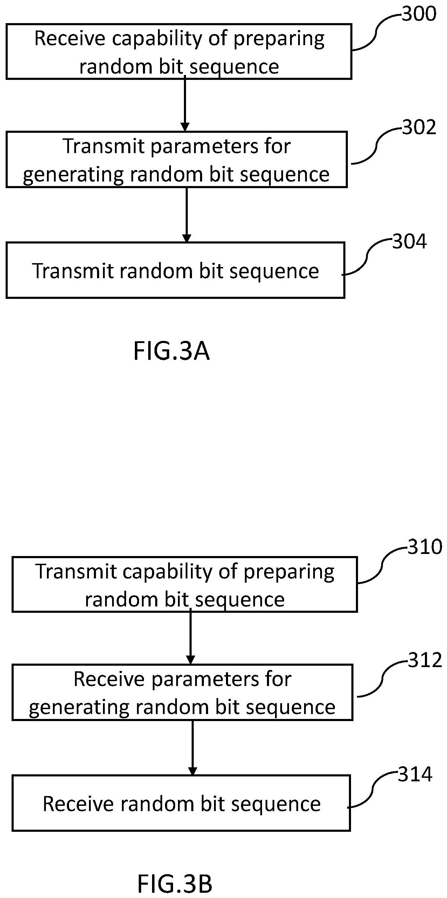

Figs. 3A and 3B show example methods that can be used in examples of the disclosure. The method of Fig. 3A can be implemented by a data node and the method of Fig. 3B can be implemented by an ML node.

A data node is a node that transmits a random bit sequence. The data node can provide data than can be used for training ML models 200. An ML node is a node that uses one or more ML models. The ML node can be an ML receiver or any other suitable type of node. The ML node can receive data from the data node and use the received data to train the ML model. The data node can be a user equipment or an access node. Similarly, the ML node can be a user equipment or an access node.

In the example of Fig. 3A the method comprises, at block 300, receiving, from an ML node, an indication of a capability of generating a random bit sequence. The indication of capability can be received as part of a configuration process or using any other suitable type of signalling.

At block 302 the method comprises transmitting, to the ML node, one or more parameters for generating a random bit sequence. The parameters that are transmitted conform to the indicated capability.

The parameters comprise information that can be used to generate a random bit sequence. The parameters can be used to ensure that the same random bit sequence is generated by both the ML node and the data node.

In some examples the parameters can comprise parameters relating to a random number generator (RNG). In some examples the parameters can comprise one or more RNG algorithms, a seed of the RNG, a length of a random bit sequence that is to be generated, and/or any other suitable parameters.

In some examples there can be a pre-configuration process where the respective nodes are configured with one or more RNGs. In such examples an index of the available RNGs can be agreed upon during the pre-configuration. In such examples the parameters could comprise a reference to the index to indicate the RNG algorithm that is to be used.

The method also comprises, at block 304, transmitting a random bit sequence. The random bit sequence is generated in accordance with the transmitted parameters.

The random bit sequence comprises training data that can be used for training an ML model in the ML node.

The random bit sequence can be transmitted in any suitable manner. In some examples the random bit sequence can be transmitted on demand. The data for transmission can be scheduled via control signaling. In some examples the random bit sequence can be transmitted using a pattern defined in the indicated capability. In some examples the random bit sequence can be broadcast to two or more ML nodes. In some examples the data node can measure resource usage during a time interval.

The random bit sequence can then be transmitted if the resource usage is below a threshold.

The random bit sequence can be mapped directly to transmitted symbols. This can enable steps of the physical layer mapping to be omitted. For example, steps such as code block segmentation and code block concatenation can be omitted.

Fig. 3B shows an example method that can be performed by an ML node. The ML node that performs the method of Fig. 3B can be a corresponding node to the data node that performs the method of Fig. 3A. That is, the data generated by the data node of Fig. 3A can transmit the random bit sequence to the ML node of Fig. 3B.

The method comprises, at block 310, transmitting, to a data node, an indication of a capability of generating a random bit sequence.

The indication of capability can be transmitted using any suitable signaling. The signaling that is used to transmit the indication of capability might be dependent upon whether the ML node is an access node or a UE. For example, if the ML node is a UE the indication could be transmitted using Radio Resource Control (RRC) signaling. If the ML node is an access node the indication could be transmitted using System Information (SI).

At block 312 the method comprises receiving, from the data node, one or more parameters for generating a random bit sequence. The received parameters conform to the indicated capability.

At block 314 the method comprises receiving, from the data node, a random bit sequence wherein the random bit sequence comprises training data for training an ML model in the ML node.

The ML node can label the received random bit sequence to generate labelled data for training the ML model. The ML node can use a random bit sequence generated by the ML node using the received one or more parameters to label the received random bit sequence.

The ML node can store the received raw signal comprising the transmitted bit sequence. The stored raw signal can be used as an input for training an ML model.

In some examples the ML node can demodulate the received signals and log the random received bit sequence after the demodulation. This can enable steps of the physical layer mapping to be omitted.

In some examples the ML node can transmit a request to the data node for the random bit sequences. The request can comprise an RNG algorithm to be used, a seed of an RNG algorithm to be used, a length of a random bit sequence that is to be generated, transmit power levels to be used for a signal comprising the random bit sequence and/or any other suitable information. The data node can generate and transmit the random bit sequence in response to the received request.

The ML model can be trained to estimate received bit probabilities or to perform any other suitable function. The trained ML model can be used for channel estimation or equalization or any other suitable purpose. The trained ML model can be used to improve the reliability of communications between the ML node and other nodes in the network.

Examples of the disclosure can be used to obtain training data from the real network. This facilitates the fine tuning of machine learning models at the deployment locations. Examples of the disclosure enable the training data to be collected with little detrimental impact to the network.

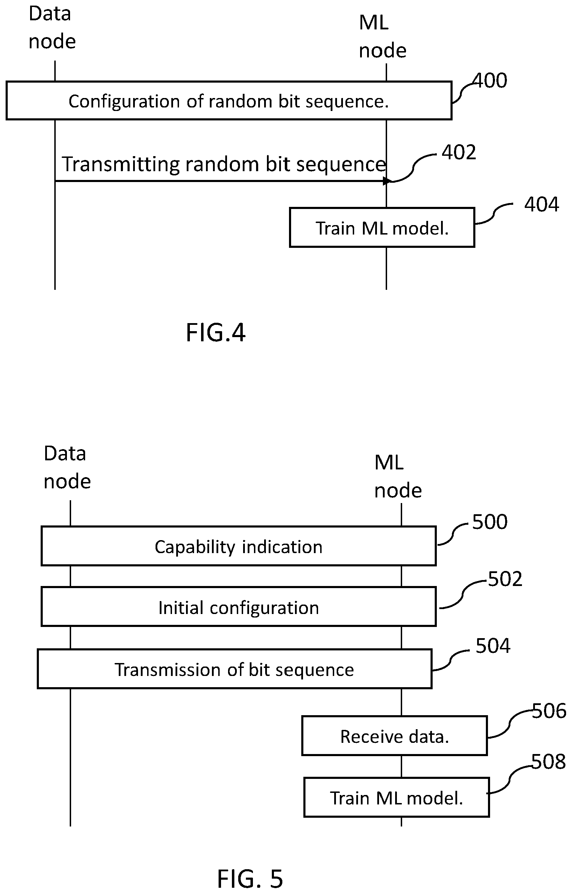

Fig. 4 shows an example method that can be implemented in examples of the disclosure. Fig. 4 shows signaling between a data node and an ML node. In this example the data node could be a UE and the ML node could be an access node. In other examples the data node could be an access node and the ML node could be a UE.

At block 400 the method comprises the configuration of the random bit sequence. This configuration can comprise the ML node indicating the capability that the ML node has to generate a random bit sequence. This indication is signaled from the ML node to the data node. This indication ensures that the same process can be used to generate a random bit sequence in both the data node and the ML node.

The configuration can also comprise the data node transmitting the parameters that are to be used to generate the random bit sequence to the ML node. The parameters that are transmitted can conform to the indicated capability.

The configuration can ensure that the same RNG processes are used by both the data node and the ML node. This can enable both the data node and the ML node to produce the same random bit sequences.

At block 402 the data node transmits a random bit sequence to the ML node. The random bit sequence is generated using the RNG parameters that have been agreed upon during the configuration block. The data node can generate and transmit the random bit sequence in response to a request from the ML node or in response to any other suitable trigger.

At block 404 the ML node uses the received random bit sequence to train the ML model. As the same random bit sequence can be generated by both the data node and the ML node the noisy received signal comprising the random bit sequence can be labelled using a corresponding random bit sequence generated by the ML node. The labelled data can then be used to train and/or calibrate the ML model. The ML model can be trained to perform any suitable function.

Fig. 5 shows another example method that can be implemented in examples of the disclosure. Fig. 5 shows signaling between a data node and an ML node. In this example the data node could be a UE and the ML node could be an access node. Or the data node could be an access node and the ML node could be a UE. In some cases a UE could establish a connection with an access node for the purpose of training of the ML. The connection can enable the training data to be collected.

Prior to the method of Fig. 5 being performed the data node and the ML node can be pre-configured with RNG algorithms. The RNG algorithms, and or the way in which random bit sequences are generated using the RNG algorithms can be pre-agreed by network vendors or any other suitable entities. Any suitable RNGs can be used in implementations of the disclosure.

In some examples it can be pre-agreed that random bit sequences are generated by specifying RNGs that can be given a seed and always produce the same bit sequence using the given seed. In some examples bit sequences of a certain length can be specified. The bit length can be specified together with the seeds and the RNGS. The predefined sequences or RNGs can be stored by the respective nodes with their hardware.

At block 500 the method comprises a capability indication being exchanged between the data node and the ML node. The capability indication enables the data node and the ML node to make each other aware that they can produce random bit sequences for training data. The capability indication enables the data node and the ML node to make each other aware of the limitations that they have in producing the random bit sequence for training data. In some examples the capability indication can comprise the ML node can indicate to the data node the capability of the ML node for generating a random bit sequence. Similarly, the data node can indicate to the ML node the capability of the data node for generating a random bit sequence.

The signaling that is used by a node to indicate a capability might be dependent upon the type of node. For example, a UE could indicate capability during connection establishment. This indication could be made using RRC signaling such as RRC UE capability. An access node could indicate capability using SI.

At block 502 an initial configuration of the data node and the ML node is performed. The initial configuration can comprise the data node transmitting parameters that are to be used for generating a random bit sequence to the ML node. The parameters conform to the capabilities that were indicated at block 500. The parameters can comprise the type of RNG to be used, an initial state of the RNG, how the transmission of the random bit sequence is to be scheduled, when the transmission of the random bit sequence is to be scheduled, or any other suitable information.

At block 504 the training data is transmitted from the data node to the ML node. The training data comprises one or more random bit sequences where the random bit sequences have been generated in accordance with the transmitted parameters and the indicated capabilities.

In examples of the disclosure it can be the ML node that requests the data to be generated and scheduled for transmission. That is, it is the node that is to receive data that requests the data to be generated and scheduled for transmission.

The training data can be scheduled for transmission in any suitable way. In some examples the training data can be scheduled on demand in response to a request from the ML node. In such examples the training data can be scheduled using control signaling such a Medium Access Control Control Element (MAC CE) or Downlink/ Uplink (DUUL) control channels.

In some examples the training data can be scheduled and transmitted using a predefined pattern. The predefined pattern can be based on the indicated capabilities or any other suitable information that has been exchanged in the configuration.

In some examples the training data can be transmitted to two or more ML nodes. For instance, the data can be broadcast on DL. This could be the case if two or more ML nodes have requested data from the data node.

In some cases the training data could be broadcast without an ML node specifically requesting the data. In such cases an ML node, such as a UE, can read from SI when and where the training data will be transmitted. An ML node could read this information without connecting to a cell. In such cases a ML node can obtain the training data just by listening to the broadcast training data.

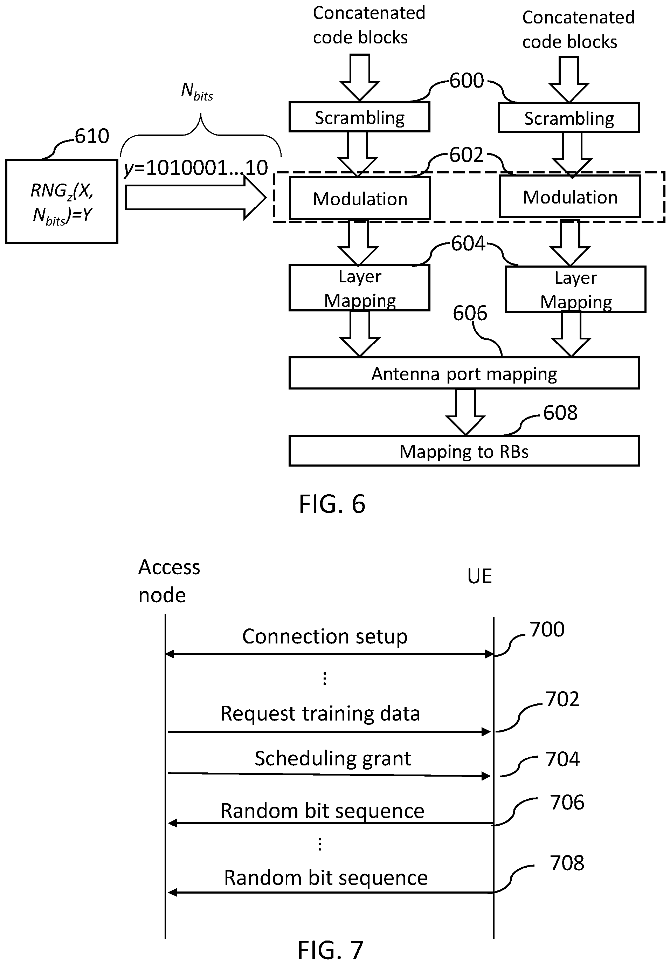

The random bit sequence that comprises the training data can fully or partially replace the physical layer procedures. Fig. 6 shows an example of a mapping of a generated random bit sequence to a physical layer.

At block 506 the ML node receives the transmitted training data. The received training data comprises the random bit sequence that was generated by the data node.

The data node can be made aware of the scheduled transmission of the training data. Any suitable signaling can be used to make the data node aware of the scheduled transmission of the training data. For instance, the Downlink Control Information (DCI) or Uplink Control Information (UCI) can comprise information that indicates when the transmission of the training data is scheduled.

If the data node is aware of the scheduled transmission of the training data the data node also knows to process the received data as training data. For example, the received training data does not need to be passed to the upper layers but can be prepared and logged for calibration or training of the ML.

At block 508 the ML node trains or calibrates the ML model used by the ML node. The ML node uses the received signals and a random bit sequence generated by the ML node to train or calibrate the ML model.

The ML node can use the random bit sequence that is generated by the ML node as labels and the corresponding received raw signals as an input for the ML model. This provides real data from the network that can be used for supervised training of the ML model.

The received data can be used in a similar manner for training any parts of an ML node if a differentiable model of the complete ML node is available. In particular, since the ML node knows the transmitted bits Y and it has logged the received signal $Z_{rx}$ the ML model can be now trained. For a fully learned receiver that takes as input the received signal after the FFT, then:

$$f_{receiver}(Z_{rx}) = Y_{rx},$$

where $Y_{rx}$ are the estimates of the actual transmitted bits Y. By minimizing a loss function dependent on the estimated and actual bits, for example, binary cross entropy $L = CE(Y_{rx}, Y)$, the receiver function can be trained with this information.

Fig. 6 shows an example physical layer mapping that can be used in some examples of the disclosure. This shows the physical layer mapping for two layers.

Fig. 6 shows part of a physical layer processing method. In standard physical layer processing method a transport block is processed to generate concatenated code blocks. This processing can comprise Cyclic Redundancy Check (CRC) attachment, graph selection, code block segmentation, channel coding, rate matching, code block concatenation and/or any other suitable processing. These processes are not shown in Fig. 6 for brevity.

In the standard physical processing layer method the concatenated code blocks are scrambled at block 600 and then modulated at block 602 before the layer mapping at block 604, antenna port aping at block 606 and mapping to Resource Blocks (RBs) at block 610.

However, in examples of the disclosure the random bit sequence y is generated by the random number generator 610. This random bit sequence can be directly mapped to symbols on the given RBs or mapped to a transport block (TB) payload. For example, if the generated bit sequence is to be used as training data for a fully learned ML model then, the transmitted sequence can completely replace the payload data. That is, all of the physical layer processing method prior to the modulation can be omitted. This provides a flexible process that can be used for a variety of different receiver algorithms.

In the example of Fig. 6 the RNG algorithm 610 has been specified during a capability indication and/or a reconfiguration process. An initial state of the RNG algorithm 610 can be agreed upon by both the data node and the ML node. This initial state, in some cases represented by the seed, can be agreed upon during the initial configuration or during any other suitable process. In this case the initial state of the RNG algorithm is represented by X. The number of bits to be transmitted can also be agreed upon by both the data node and the ML node. The number of bits to be transmitted can be agreed upon during the initial configuration or during any other suitable process. In this case the number of bits to be transmitted of the RNG algorithm is represented by $N_{bits}$. The RNG therefore provides the random bit sequence y as an output. The random bit sequence y is known to both the ML node and the data node. As shown in Fig. 6 the random bit sequence y is mapped directly to the transmitted symbols and all the earlier standard physical layer blocks have been skipped.

The ML node knows that the blocks of the physical layer process have been omitted. The data node knows the random bit sequence Y that was transmitted. The data node can log the received bits $Y_{rx}$ after demodulation. The received bits $Y_{rx}$ can be associated with a generated random bit sequence Y of the same length. This can be used for training and/or calibration of the machine learning model.

The ML node can also store the received raw signal. The raw signal can be stored after a transform such as an FFT has been performed on the raw signal. The raw signal can be stored with associated control information such as the DMRS configuration. The raw signal and the transmitted bit sequence comprise training or calibration data for the ML model.

Fig. 7 shows an example method that can be used in some examples of the disclosure. In this case an access node requests the training data from a UE. In this case the access node is the ML node and the UE is the data node.

At block 700 a connection setup is established between the access node and the UE. During the connection setup the capabilities of the respective nodes for generating random bit sequences can be shared.

At block 702 the access node transmits a request for training data to the UE. The request can be transmitted when the access node needs the training data. The request can be transmitted at some time after the connection setup. The request for training data can also comprise information such as an RNG index, random seed, amount of data needed and/or any other suitable information. In some examples the request could comprise power levels that are to be used for obtaining data with different signal to noise ratios. Other information could be included within the request in other examples.

At block 704 the access node provides a scheduling grant to the UE for the transmission of the requested training data. The Physical Downlink Control Channel (PDCCH) can be used for the scheduling grant.

At block 706 the UE transmits the requested training data to the access node. The requested training data comprises a random bit sequence where the random bit sequence is generated using the parameters agreed during the connection setup. The random bit sequence can be transmitted with the requested RNG seed and/or and other suitable information.

In some examples the random bit sequences can comprise completely random bits. In other examples the random bit sequences can comprise one or more regular portions such as a regular header. It may be preferred to use completely random bits as this can provide for more robust training of the ML model.

The training data is transmitted in accordance with the scheduling grant that is provided by the access node. The Physical Uplink Shared Channel (PUSCH) can be used for the training data.

Once the access node receives the random bit sequence the access node will store the received data vectors. The data vectors and the RNG index and seed can be used to reconstruct the original bit sequence that was transmitted so that this can be used for training the ML model.

At block 708 further transmission of requested training data to the access node is performed. The requested training data can be transmitted in as many slots as requested. The RNG state can be maintained between slots. To maintain the proper state for the RNG the RNG cannot be used for anything else between the generation of the respective random number sequences.

In the example of Fig. 7 the access node is the ML node and the UE is the data node. In other examples the access node could be the data node and the UE could be the ML node. In such cases a method similar to the method shown would be used but with the requests for data being transmitted by the UE and the random bits sequences being transmitted by the access node.

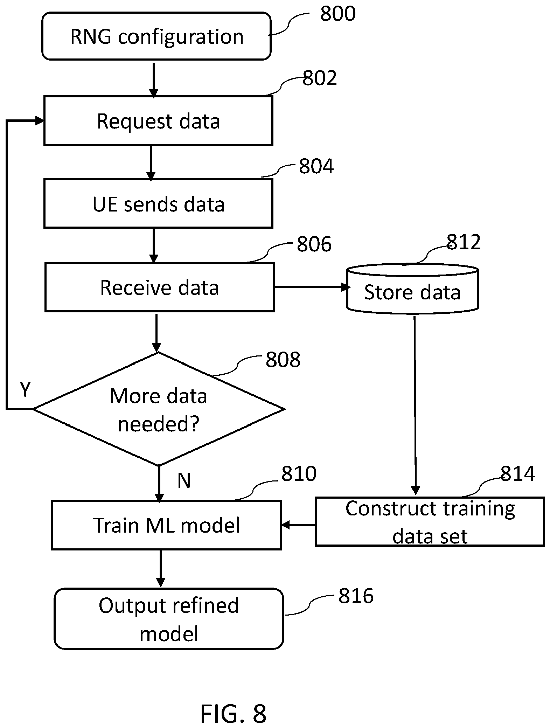

Fig. 8 shows an example method that can be implemented in examples of the disclosure. In this example an access node requests the training data. In this example an access node is the ML node and the UE is the data node. In other examples the access node could be the data node and the UE could be the ML node.

At block 800 a configuration procedure is performed between the access node and the UE. The configuration can comprise the parameters that are to be used for generating a random bit sequence to be agreed upon by the access node and the UE.

At block 802 the access node requests training data. The access node can transmit a request for the training data to the UE. In response to the request, at block 804 the UE transmits the slot of training data. The training data comprises a random bit sequence that is generated in accordance with the agreed parameters.

At block 806 the access node receives the random bit sequence. At block 812 access node can store any suitable data relating to the received random bit sequence. In some examples the access node can store the received raw signal. The raw signal can be stored after an FFT has been performed. The raw signal can be stored with associated Demodulation Reference Signal (DMRS) or other configuration information.

At block 814 the stored data is used to construct the training data set. The training data set can comprise the raw received signal as an input signal and the known transmitted bit as the labels.

At block 808 it is determined whether more training data is needed. If more training data is needed, then the method returns to block 802 and the access node requests more data.

If no more training data is needed then the method proceeds to block 810 and the ML model is trained. The ML model is trained using the data set that is constructed at block 814. The ML model can be trained in a supervised manner.

The method provides a refined or trained ML model as an output at block 816.

In examples of the disclosure data traffic would be prioritized over the collection of training data. Therefore, a data node can decline a request for training data. A data node can decline a request using any suitable mechanism. In some examples a data node can decline a request for training data simply by ignoring the request for training data. In such examples the request for training data can be associated with an expiration time. If no training data has been received by the end of the expiration time the request is deemed to be declined.

In examples where the data node is a UE the UE could reject a request for training data by sending a scheduling request for new uplink data instead of sending the training data. From this the access node, which is the ML node, determines that the training data is not expected.

In some examples a physical layer priority flag can be used to identify the training data as low priority. In such examples the ML node would only make a request for training data if there is no other useful data within the queue.

The respective nodes can also be configured to determine when there is a sufficiently low congestion level in the network to make it possible to consume resources for producing the ML training data. Any suitable means can be used to determine the congestion level. In some examples the congestion level can be determined based on a certain time window, within which the use of resources is measured. If the use of resources is below a predefined threshold, transmission of training data is allowed.

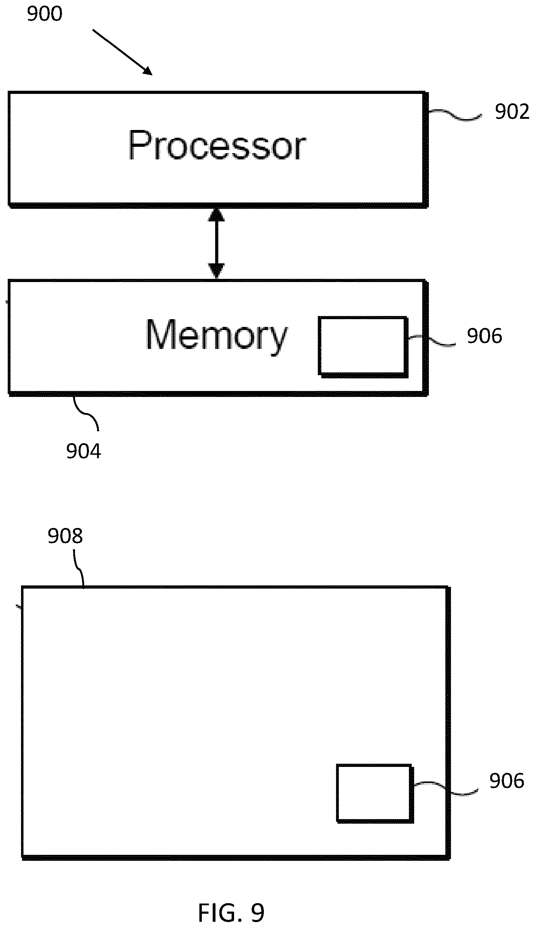

Fig. 9 illustrates an example controller 900. The controller 900 could be provided within an entity such as a data node or a ML node or any other suitable apparatus. Implementation of the controller 900 may be as controller circuitry. The controller 900 may be implemented in hardware alone, have certain aspects in software including firmware alone or can be a combination of hardware and software (including firmware).

As illustrated in Fig. 9 the controller 900 can be implemented using instructions that enable hardware functionality, for example, by using executable instructions of a computer program 906 in a general-purpose or special-purpose processor 902 that may be stored on a computer readable storage medium (disk, memory etc.) to be executed by such a processor 902.

The processor 902 is configured to read from and write to the memory 904. The processor 902 may also comprise an output interface via which data and/or commands are output by the processor 902 and an input interface via which data and/or commands are input to the processor 902.

The memory 904 stores a computer program 906 comprising computer program instructions (computer program code) that controls the operation of the apparatus when loaded into the processor 902. The computer program instructions, of the computer program 906, provide the logic and routines that enables the apparatus to perform the methods illustrated in the Figs. The processor 902 by reading the memory 904 is able to load and execute the computer program 906.

The controller 900 therefore comprises: at least one processor 902; and at least one memory 904 storing instructions that, when executed by the at least one processor 902, cause a data node to perform at least:

receiving 300, from a machine learning node, an indication of a capability of generating a random bit sequence;
transmitting 302, to the machine learning node, one or more parameters for generating a random bit sequence wherein the parameters conform to the indicated capability; and
transmitting 304 a random bit sequence wherein the random bit sequence is generated in accordance with the transmitted parameters.

The controller 900 therefore comprises: at least one processor 902; and at least one memory 904 storing instructions that, when executed by the at least one processor 902, cause a ML node to perform at least:

transmitting 310, to a data node, an indication of a capability of generating a random bit sequence;
receiving 312, from the data node, one or more parameters for generating a random bit sequence wherein the received parameters conform to the indicated capability; and
receiving 314, from the data node, a random bit sequence wherein the random bit sequence comprises training data for training a machine learning model in the machine learning node.

The computer program 906 may arrive at the apparatus via any suitable delivery mechanism 908. The delivery mechanism 908 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 906. The delivery mechanism may be a signal configured to reliably transfer the computer program 906. The apparatus may propagate or transmit the computer program 906 as a computer data signal.

The computer program 906 can comprise computer program instructions for causing a data node to perform at least the following or for performing at least the following:

receiving 300, from a machine learning node, an indication of a capability of generating a random bit sequence;
transmitting 302, to the machine learning node, one or more parameters for generating a random bit sequence wherein the parameters conform to the indicated capability; and
transmitting 304 a random bit sequence wherein the random bit sequence is generated in accordance with the transmitted parameters.

The computer program 906 can comprise computer program instructions for causing an ML node to perform at least the following or for performing at least the following:

transmitting 310, to a data node, an indication of a capability of generating a random bit sequence;
receiving 312, from the data node, one or more parameters for generating a random bit sequence wherein the received parameters conform to the indicated capability; and
receiving 314, from the data node, a random bit sequence wherein the random bit sequence comprises training data for training a machine learning model in the machine learning node.

The computer program instructions may be comprised in a computer program, a non-transitory computer readable medium, a computer program product, a machine-readable medium. In some but not necessarily all examples, the computer program instructions may be distributed over more than one computer program.

Although the memory 904 is illustrated as a single component/circuitry it may be implemented as one or more separate components/circuitry some or all of which may be integrated/removable and/or may provide permanent/semi-permanent/ dynamic/cached storage.

Although the processor 902 is illustrated as a single component/circuitry it may be implemented as one or more separate components/circuitry some or all of which may be integrated/removable. The processor 902 may be a single core or multi-core processor.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, "determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. A data node comprising means for:

   receiving, from a machine learning node, an indication of a capability of generating a random bit sequence;
   transmitting, to the machine learning node, one or more parameters for generating a random bit sequence wherein the parameters conform to the indicated capability; and
   transmitting a random bit sequence wherein the random bit sequence is generated in accordance with the transmitted parameters.

2. A data node as claimed in claim 1 wherein the one or more parameters comprise at least one of:

   one or more random number generator algorithms;
   a seed of the random number generator;
   a length of a random bit sequence that is to be generated.

3. A data node as claimed in any preceding claim wherein the random bit sequence comprises training data for training a machine learning model in the machine learning node.

4. A data node as claimed in any preceding claim wherein the random bit sequence is transmitted on demand.

5. A data node as claimed in any of claims 1 to 3 wherein the random bit sequence is transmitted using a pattern defined in the indicated capability.

6. A data node as claimed in any of claims 1 to 3 wherein the random bit sequence is broadcast to two or more machine learning nodes.

7. A data node as claimed in any preceding claim wherein the means are for measuring resource usage during a time interval and transmitting the random bit sequence if the resource usage is below a threshold.

8. A data node as claimed in any preceding claim wherein the random bit sequence is mapped directly to transmitted symbols.

9. A method comprising:

   receiving, from a machine learning node, an indication of a capability of generating a random bit sequence;
   transmitting, to the machine learning node, one or more parameters for generating a random bit sequence wherein the parameters conform to the indicated capability; and
   transmitting a random bit sequence wherein the random bit sequence is generated in accordance with the transmitted parameters.

10. A machine learning node comprising means for:

    transmitting, to a data node, an indication of a capability of generating a random bit sequence;
    receiving, from the data node, one or more parameters for generating a random bit sequence wherein the received parameters conform to the indicated capability; and
    receiving, from the data node, a random bit sequence wherein the random bit sequence comprises training data for training a machine learning model in the machine learning node.

11. A machine learning node as claimed in claim 10 wherein the means are for labelling the received random bit sequence using a random bit sequence generated using the received one or more parameters so that the labelled data can be used to train the machine learning model.

12. A machine learning node as claimed in any of claims 10 to 11 wherein the means are for storing a received raw signal comprising the transmitted bit sequence.

13. A machine learning node as claimed in claim 12 wherein the means are for using the stored raw signal as inputs for training a machine learning model.

14. A method comprising:

    transmitting, to a data node, an indication of a capability of generating a random bit sequence;
    receiving, from the data node, one or more parameters for generating a random bit sequence wherein the received parameters conform to the indicated capability; and
    receiving, from the data node, a random bit sequence wherein the random bit sequence comprises training data for training a machine learning model in the machine learning node.

15. A computer program comprising instructions which, when executed by a machine learning node, cause the machine learning node to perform at least a method as claimed in claim 9 or claim 14.

FIG. 1

200

**LLRs**
**Output size:** $N_{sc} \times N_{symb} \times N_B$
214

**Type:** Convolution
**Input size:** $N_{sc} \times N_{symb} \times N_M$
**Output size:** $N_{sc} \times N_{symb} \times N_{B+1}$
*Filter size: (1,1)*
*Activation: linear*
212

210

Resnet
Block i

**Type:** Summation
**Input size:** $N_{sc} \times N_{symb} \times N_i$
**Output size:** $N_{sc} \times N_{symb} \times N_i$

**Type:** Convolution
**Input size:** $N_{sc} \times N_{symb} \times N_i$
**Output size:** $N_{sc} \times N_{symb} \times N_i$
*Filter size: (3,3)*
*Pre-activation: ReLU*

**Type:** Convolution
**Input size:** $N_{sc} \times N_{symb} \times N_{i-1}$
**Output size:** $N_{sc} \times N_{symb} \times N_i$
*Filter size: (1,1)*
*Activation: linear*

**Type:** Convolution
**Input size:** $N_{sc} \times N_{symb} \times N_{i-1}$
**Output size:** $N_{sc} \times N_{symb} \times N_i$
*Filter size: (3,3)*
*Pre-activation: ReLU*

**Type:** Complex to real
**Input size:** $N_{sc} \times N_{symb} \times 2$
**Output size:** $N_{sc} \times N_{symb} \times 4$
202

208

**Received OFDM symbols**
**Output size:** $N_{sc} \times N_{symb} \times 1$

206

**Raw channel estimate**
**Output size:** $N_{sc} \times N_{symb} \times 1$

FIG. 2

```
┌─────────────────────────────────┐
│   Receive capability of preparing│ ⟳ 300
│        random bit sequence       │
└─────────────────────────────────┘
                 │
                 ▼
┌─────────────────────────────────┐
│      Transmit parameters for     │ ⟳ 302
│   generating random bit sequence │
└─────────────────────────────────┘
                 │
                 ▼
┌─────────────────────────────────┐
│    Transmit random bit sequence  │ ⟳ 304
└─────────────────────────────────┘
```

FIG.3A

```
┌─────────────────────────────────┐
│   Transmit capability of preparing│ ⟳ 310
│        random bit sequence       │
└─────────────────────────────────┘
                 │
                 ▼
┌─────────────────────────────────┐
│       Receive parameters for     │ ⟳ 312
│   generating random bit sequence │
└─────────────────────────────────┘
                 │
                 ▼
┌─────────────────────────────────┐
│     Receive random bit sequence  │ ⟳ 314
└─────────────────────────────────┘
```

FIG.3B

Data node  ML node

| Configuration of random bit sequence. | 400 |

Transmitting random bit sequence  402

| Train ML model. | 404 |

FIG.4

Data node  ML node

| Capability indication | 500 |

| Initial configuration | 502 |

| Transmission of bit sequence | 504 |

| Receive data. | 506 |

| Train ML model. | 508 |

FIG. 5

Concatenated code blocks

Concatenated code blocks

$N_{bits}$

610

$RNG_z(X, N_{bits})=Y$

y=1010001...10

Scrambling ⌒600

Scrambling

Modulation ⌒602

Modulation

Layer Mapping ⌒604

Layer Mapping

606

Antenna port mapping

608

Mapping to RBs

FIG. 6

Access node

UE

Connection setup ⌒700

⋮

Request training data ⌒702

Scheduling grant 704

Random bit sequence 706

⋮

Random bit sequence 708

FIG. 7

RNG configuration — 800

↓

Request data — 802

↓

UE sends data — 804

↓

Receive data — 806 → Store data — 812

↓

More data needed? — 808

Y → (back to Request data)

N ↓

Train ML model — 810 ← Construct training data set — 814 ← (from Store data)

↓

Output refined model — 816

FIG. 8

900

Processor ~ 902

Memory ☐ ~ 906

904

908

☐ ~ 906

FIG. 9

Europäisches Patentamt

European Patent Office

Office européen des brevets

# EUROPEAN SEARCH REPORT

**Application Number**

EP 23 19 7141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/188394 A1 (AIT AOUDIA FAYCAL [FR] ET AL) 15 June 2023 (2023-06-15)<br>* abstract *<br>* figures 1-13 *<br>* paragraph [0005] – paragraph [0009] *<br>* paragraph [0071] – paragraph [0152] *<br>----- | 1-15 | INV.<br>G06N20/00<br>H04L25/02<br><br>ADD.<br>G06F7/58 |
| A | HONKALA MIKKO ET AL: "DeepRx: Fully Convolutional Deep Learning Receiver", IEEE TRANSACTIONS ON WIRELESS COMMUNICATIONS, IEEE SERVICE CENTER, PISCATAWAY, NJ, US,<br>vol. 20, no. 6,<br>2 February 2021 (2021-02-02), pages 3925-3940, XP011859718,<br>ISSN: 1536-1276, DOI:<br>10.1109/TWC.2021.3054520<br>[retrieved on 2021-06-09]<br>* the whole document *<br>----- | 1-15 | |

**TECHNICAL FIELDS SEARCHED (IPC)**

G06N
H04L
G06F

The present search report has been drawn up for all claims

| Place of search | Date of completion of the search | Examiner |
|---|---|---|
| Munich | 28 February 2024 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 7141

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2024

| Patent document cited in search report | Publication date | Patent family member(s) | Publication date |
|---|---|---|---|
| US 2023188394 A1 | 15-06-2023 | CN 115668218 A<br>EP 4154184 A2<br>US 2023188394 A1<br>WO 2021234027 A2 | 31-01-2023<br>29-03-2023<br>15-06-2023<br>25-11-2021 |

EPO FORM P0459

For more details about this annex : see Official Journal of the European Patent Office, No. 12/82